# EUROPÄISCHE PATENTSCHRIFT

(11) **EP 1 612 540 B1**
(45) Veröffentlichungstag und Bekanntmachung des Hinweises auf die Patenterteilung: **11.11.2009**
(21) Anmeldenummer: 05104298.4
(22) Anmeldetag: 20.05.2005
(51) Int. Cl.: G01N 21/35

(54) **Beschichtete mikromechanische Infrarotquelle**
Coated micromechanical infrared source
Source infrarouge micromécanique à revêtement

(30) Priorität: 02.07.2004 DE 102004032176
(43) Veröffentlichungstag der Anmeldung: 04.01.2006
(73) Patentinhaber: ROBERT BOSCH GMBH, 70442 Stuttgart (DE)
(72) Erfinder: Arndt, Michael, 72762 Reutlingen (DE)

(56) Entgegenhaltungen:
- EP-A- 0 922 972
- DE-A1- 10 214 769
- US-A- 5 258 618
- US-A- 5 869 749
- US-A- 5 892 140
- US-A- 6 139 968

## Beschreibung

### Stand der Technik

Die Erfindung betrifft einen beschichteten mikromechanischen Strahler.

Sensoren für die Detektion von Gasen, die auf dem Prinzip der Strahlungsabsorption im zu messenden Gas basieren, bestehen üblicherweise aus einer Strahlungsquelle und einem oder mehreren wellenlängenspezifischen Strahlungsdetektoren. Ein solcher Sensor ist in der DE 102 43 014 A1 beschrieben.

Für Sensoren, welche die Absorption im mittleren Infrarotbereich (Wellenlänge λ zwischen 3 µm und 25 µm) messen, wie z.B. Sensoren zur Detektion von Kohlendioxid (CO₂), werden üblicherweise thermische Strahler als Quelle verwendet.

Die wellenlängenspezifischen Strahlungsdetektoren bestehen aus einer Filtereinheit, die die zu messende Wellenlänge transmittiert, sowie einem breitbandigen Infrarotdetektor. Als Filter können hier beispielsweise Interferenzfilter (z.B. Fabry-Perot-Filter) zum Einsatz kommen. Einfache Interferenzfilter haben die Eigenschaft, auch Harmonische der gewünschten Wellenlänge zu transmittieren. Dies kann zum einen durch einen komplizierten und damit kostenintensiven Aufbau des Interferenzfilters behoben werden, zum anderen durch den Einsatz eines einfachen zusätzlichen Breitbandfilters vor dem eigentlichen Detektor. Wird ein solches Breitbandfilter am Detektor verwendet, so bedingt dies einen aufwendigen Aufbau des Detektors, da dann zwei Filter montiert werden müssen.

Vorteile der Erfindung

Die Erfindung betrifft eine mikromechanische Infrarotquelle, enthaltend
- eine Heizerstruktur zur Erzeugung infraroter Strahlung sowie
- einem in Austrittsrichtung der Strahlung aus der Infrarotquelle angeordneten Filtermittel, welches von der aus der Infrarotquelle austretenden Strahlung passiert wird,
- wobei das Filtermittel eine bandpassartige Transmissionscharakteristik aufweist. Durch die derartige Veränderung der mikromechanischen Infrarotquelle, so dass nur Strahlung in einem engen Bereich um die zentrale Wellenlänge des Filtermittels austreten kann, ergibt sich ein vereinfachter Aufbau des Infrarotempfängers, da dann dort auf Filtermittel verzichtet werden kann bzw. einfachere Filtermittel verwendet werden können.
   Eine vorteilhafte Ausgestaltung der Erfindung betrifft eine mikromechanische Infrarotquelle, enthaltend
- eine Heizerstruktur zur Erzeugung infraroter Strahlung sowie
- eine Aneinanderreihung einer ersten Schicht und einer zweiten Schicht in Austrittsrichtung der Strahlung aus der Infrarotquelle,
wobei
- eine der beiden Schichten ein derartiges wellenlängenabhängiges Transmissionsverhalten aufweist, dass bei kleinen infraroten Wellenlängen keine oder nur eine geringe Transmission stattfmdet und bei großen infraroten Wellenlängen eine vollständige oder große Transmission stattfmdet und im Bereich um eine erste Wellenlänge der Anstieg von geringen zu großen Transmissionswerten erfolgt und
- die andere der beiden Schichten ein derartiges wellenlängenabhängiges Transmissionsverhalten aufweist, dass bei kleinen infraroten Wellenlängen vollständige oder eine große Transmission stattfindet und bei großen infraroten Wellenlängen keine oder nur eine geringe Transmission stattfindet und im Bereich um eine zweite Wellenlänge der Abfall von großen zu geringen Transmissionswerten erfolgt
und wobei
- die erste Wellenlänge kleiner als die zweite Wellenlänge ist.
   Die Aneinanderreihung der beiden Schichten ergibt ein Transmissionsverhalten, welches
- bei kleinen und großen Wellenlängen keine Transmission und in einem Zwischenbereich eine gute bzw. große bzw. starke Transmission ergibt.
Damit ergibt sich eine Bandpass-Struktur. Der Mittelwert des Durchlassbereiches der aneinandergereihten Schichten liegt z.B. zwischen 4µm und 5µm.
Durch den Einsatz der erfmdungsgemäßen Infrarotquelle entfällt die Montage eines zusätzlichen breitbandigen Filters vor dem Detektor. Dies führt zu einer Verringerung der Material- und Montagekosten sowie zu einer höheren Zuverlässigkeit des Sensors.
Die erste und die zweite Schicht werden von der im Heizelement bzw. der Heizerstruktur erzeugten Strahlung vor dem Austritt aus der Infrarotquelle bzw. vor dem Auftreffen auf das Detektorelement durchlaufen.

Eine vorteilhafte Ausgestaltung der Erfindung ist dadurch gekennzeichnet, dass
- eine der beiden Schichten aus Glas und
- die andere der beiden Schichten aus Silizium oder Germanium besteht.
Diese Materialien weisen die gewünschten Eigenschaften auf und sind zur Anwendung in mikromechanischen Systemen geeignet.

Eine vorteilhafte Ausgestaltung der Erfindung ist dadurch gekennzeichnet, dass es sich bei der Heizerstruktur um ein auf einer Membran angeordnetes Widerstandselement handelt, wobei die Membran eine Kaverne im Substratmaterial überspannt. Durch die Anordnung auf der Membran werden die thermischen Verluste durch Wärmeableitung gering gehalten.

Eine vorteilhafte Ausgestaltung der Erfindung ist dadurch gekennzeichnet, dass
- das Substratmaterial die erste Schicht darstellt und
- die zweite Schicht aus einer auf das Substratmaterial aufgebrachten Beschichtung besteht.

Eine vorteilhafte Ausgestaltung der Erfindung ist dadurch gekennzeichnet, dass
- die Heizerstruktur durch ein Kappenelement abgedeckt ist, wobei das Kappenelement die erste Schicht darstellt und
- die zweite Schicht aus einer auf das Kappenelement aufgebrachten Beschichtung besteht.

Die beiden letztgenannten vorteilhaften Ausgestaltungen zeichnen sich durch besondere Einfachheit bei der Herstellung aus, da hier lediglich eine zusätzlich Schicht auf ein in vielen Ausführungsformen ohnehin vorhandenes Bauteil (Kappenelement oder Substratmaterial) aufgebracht wird.

Eine vorteilhafte Ausgestaltung der Erfindung ist dadurch gekennzeichnet, dass die Heizerstruktur mit einer Filterschicht, welche eine bandpassartige Transmissionscharakteristik aufweist, beschichtet bzw. bedeckt ist.

Weiter umfasst die Erfmdung einen Kohlendioxidsensor zur Ermittlung der Kohlendioxidkonzentration in Kraftfahrzeugen, enthaltend eine mikromechanische Infrarotquelle nach einer der beschriebenen Ausgestaltungen.

### Zeichnung

Die Zeichnung besteht aus den Figuren 1 bis 3.
Figur 1 zeigt die Struktur der erfindungsgemäßen Vorrichtung in einem ersten Ausführungsbeispiel.
Figur 2 zeigt die Struktur der erfindungsgemäßen Vorrichtung in einem zweiten Ausführungsbeispiel.
Figur 3 zeigt die Überlagerung der Transmissionskurven.

### Ausführungsbeispiele

Durch die Erfindung wird die Möglichkeit eröffnet, ein breitbandiges Filter so zu realisieren, dass kein zusätzlicher Montageaufwand bei der Fertigung des Sensors notwendig ist. Dabei wird die mikromechanische Infrarotquelle so verändert, dass nur Strahlung in einem engen Bereich um die Wellenlänge des Interferenzfilters austreten kann.

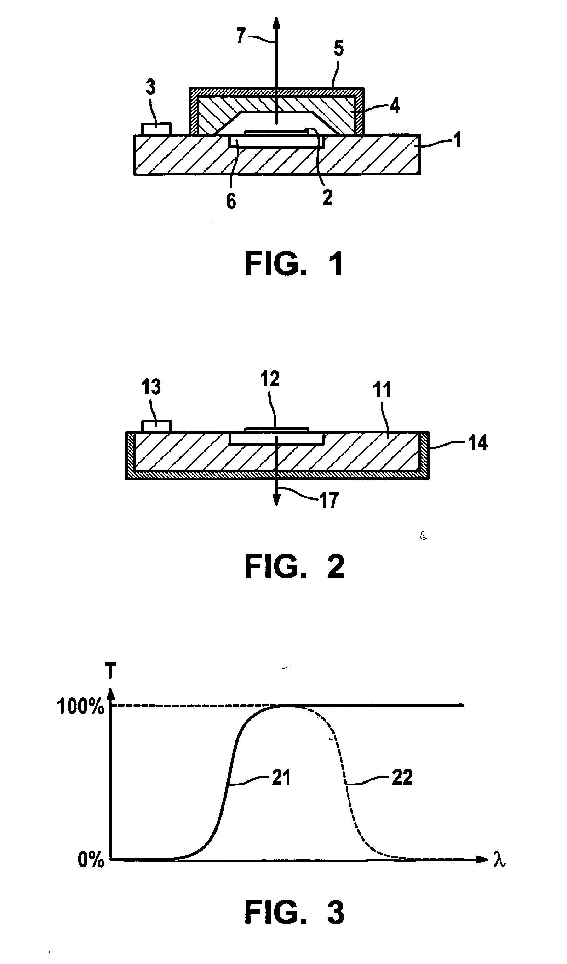

Eine mit Mitteln der Mikrostrukturierung hergestellte Infrarotquelle besteht aus einem Substrat, welches in den Figuren 1 und 2 mit 1 bzw. 11 bezeichnet ist, sowie einer thermisch vom Substrat 1 bzw. 11 entkoppelten Heizerstruktur 2 bzw. 12. Bei dieser Heizerstruktur handelt es sich im wesentlichen um einen elektrischen Widerstand. Durch Bestromung der Heizerstruktur erhöht sich erhöht sich deren Temperatur und die Struktur strahlt infrarote Strahlung ab.

Die in Figur 1 abgebildete Strahlungsquelle besitzt ein Substrat 1 aus Silizium, Germanium, Glas oder anderen Mikromechanikwerkstoffen. Auf einer Membran, welche einen Hohlraum bzw. eine Kaverne 6 überspannt, ist eine Heizerstruktur 2 aufgebracht. 3 bezeichnet ein Bondpad zum elektrischen Ansteuern der Heizerstruktur. Über der Heizerstruktur befmdet sich eine Kappe 4 aus einem Material wie beispielsweise Silizium, Germanium oder Glas, welches für den interessierenden Wellenlängenbereich transparent, in anderen Wellenlängenbereichen aber opak bzw. undurchlässig ist. Diese Kappe ist mit einer Filterschicht 5 beschichtet, welche auch im interessierenden Wellenlängenbereich transparent ist, aber eine inverse Transmissionscharakteristik zum Kappenmaterial besitzt. Dadurch ergibt sich eine Bandpasscharakteristik der beschichteten Kappe, wie sie beispielsweise in Fig. 3 dargestellt ist.
Der Pfeil 7 bezeichnet die gewünschte Austrittrichtung der infraroten Strahlung aus der Strahlungsquelle.

In Fig. 3 ist in Abszissenrichtung die Wellenlänge λ und in Ordinatenrichtung die Transmission T aufgetragen. Dabei bezeichnet 21 die Transmissionscharakteristik des Kappenmaterials und 22 die Transmissionscharakteristik des Beschichtungsmaterials. Selbstverständlich können die Transmissionscharakteristiken des Kappenmaterials und des Beschichtungsmaterials auch vertauscht werden.

Eine zweite Ausführungsform der Erfmdung ist in Fig. 2 dargestellt. Dabei kennzeichnen
11 = Substrat,
12 = auf Membran über Kaverne aufgebrachte Heizerstruktur,
13 = Bondpad bzw. Bondanschluss.
Hierbei wird das Substrat (z.B. Silizium, Germanium, Glas), welches für den interessanten Wellenlängenbereich durchlässig ist, für andere Bereiche aber nicht, mit einer Schicht 14 beschichtet. Damit wird die am Boden des Substrates austretende Strahlung für die Funktion des Sensors genutzt. Der Pfeil 17 bezeichnet die gewünschte Austrittrichtung der infraroten Strahlung aus der Strahlungsquelle. Wieder weisen die Materialien 11 und 14 Transmissionscharakteristiken 21 und 22 (siehe Fig. 3) oder umgekehrt auf.

Es ist auch möglich, die Heizerstruktur direkt mit einer Filterschicht, welche eine Bandpasscharakteristik aufweist, zu beschichten.

## Patentansprüche

1. Mikromechanische Infrarotquelle, enthaltend
- eine Heizerstruktur (2, 12) zur Erzeugung infraroter Strahlung sowie
- ein in Austrittsrichtung der Strahlung aus der Infrarotquelle angeordnetes Filtermittel (4, 5, 11, 14), welches von der aus der Infrarotquelle austretenden Strahlung passiert wird,
- wobei das Filtermittel (4, 5, 11, 14) eine bandpassartige Transmissionscharakteristik aufweist,
**dadurch gekennzeichnet, dass**
- das Filtermittel eine Aneinanderreihung einer ersten Schicht (4, 11) und einer zweiten Schicht (5, 14) in Austrittsrichtung der Strahlung aus der Infrarotquelle aufweist, wobei
- eine der beiden Schichten ein derartiges wellenlängenabhängiges Transmissionsverhalten aufweist, dass bei kleinen infraroten Wellenlängen keine oder eine nur geringe Transmission stattfindet und bei großen infraroten Wellenlängen eine vollständige oder wenigstens große Transmission stattfindet und im Bereich um eine erste Wellenlänge der Anstieg von geringen zu großen Transmissionswerten erfolgt und
- die andere der beiden Schichten ein derartiges wellenlängenabhängiges Transmissionsverhalten aufweist, dass bei kleinen infraroten Wellenlängen eine vollständige oder große Transmission stattfindet und bei großen infraroten Wellenlängen keine oder nur eine geringe Transmission stattfindet und im Bereich um eine zweite Wellenlänge der Abfall von großen zu geringen Transmissionswerten erfolgt
und wobei
- die erste Wellenlänge kleiner als die zweite Wellenlänge ist.

2. Mikromechanische Infrarotquelle nach Anspruch 1, **dadurch gekennzeichnet, dass**
- eine der beiden Schichten aus Glas und
- die andere der beiden Schichten aus Silizium oder Germanium besteht.

3. Mikromechanische Infrarotquelle nach Anspruch 1, **dadurch gekennzeichnet, dass** es sich bei der Heizerstruktur (2, 12) um ein auf einer Membran angeordnetes Widerstandselement handelt, wobei die Membran eine Kaverne (6) im Substratmaterial überspannt.

4. Mikromechanische Infrarotquelle nach Anspruch 2, **dadurch gekennzeichnet, dass**
- es sich bei der Heizerstruktur (2, 12) um ein auf einer Membran angeordnetes Widerstandselement handelt, wobei die Membran eine Kaverne (6) im Substratmaterial überspannt,
- das Substratmaterial (11) die erste Schicht darstellt und
- die zweite Schicht (14) aus einer auf das Substratmaterial aufgebrachten Beschichtung besteht.

5. Mikromechanische Infrarotquelle nach Anspruch 1, **dadurch gekennzeichnet, dass**
- es sich bei der Heizerstruktur (2, 12) um ein auf einer Membran angeordnetes Widerstandselement handelt, wobei die Membran eine Kaverne (6) im Substratmaterial überspannt,
- die Heizerstruktur (2) durch ein Kappenelement (4) abgedeckt ist, wobei das Kappenelement (4) die erste Schicht darstellt und
- die zweite Schicht (5) aus einer auf das Kappenelement aufgebrachten Beschichtung besteht.

6. Mikromechanische Infrarotquelle nach Anspruch 1, **dadurch gekennzeichnet,**
**dass** die Heizerstruktur (2) mit einer Filterschicht, welche eine bandpassartige Transmissionscharakteristik aufweist, beschichtet ist.

7. Kohlendioxidsensor zur Ermittlung der Kohlendioxidkonzentration in Kraftfahrzeugen, enthaltend eine mikromechanische Infrarotquelle nach Anspruch 1.

## Claims

1. Micromechanical infrared source, containing
- a heater structure (2, 12) for generating infrared radiation and
- a filter means (4, 5, 11, 14) arranged in the emergence direction of the radiation from the infrared source, the radiation which emerges from the infrared source passing through said filter means,
- wherein the filter means (4, 5, 11, 14) has a bandpass-like transmission characteristic,
**characterized in that**
- the filter means has a juxtaposition of a first layer (4, 11) and a second layer (5, 14) in the emergence direction of the radiation from the infrared source,
wherein
- one of the two layers has a wavelength-dependent transmission behaviour such that no or only a small degree of transmission takes place at small infrared wavelengths and a complete or at least large degree of transmission takes place at large infrared wavelengths and the rise from small to large transmission values takes place in the region around a first wavelength, and
- the other of the two layers has a wavelength-dependent transmission behaviour such that a complete or large degree of transmission takes place at small infrared wavelengths and no or only a small degree of transmission takes place at large infrared wavelengths and the fall from large to small transmission values takes place in the region around a second wavelength, and wherein
- the first wavelength is smaller than the second wavelength.

2. Micromechanical infrared source according to Claim 1, **characterized in that**
- one of the two layers is composed of glass, and
- the other of the two layers is composed of silicon or germanium.

3. Micromechanical infrared source according to Claim 1, **characterized in that** the heater structure (2, 12) is a resistance element arranged on a membrane, wherein the membrane spans a cavity (6) in the substrate material.

4. Micromechanical infrared source according to Claim 2, **characterized in that**
- the heater structure (2, 12) is a resistance element arranged on a membrane, wherein the membrane spans a cavity (6) in the substrate material,
- the substrate material (11) constitutes the first layer, and
- the second layer (14) is composed of a coating applied to the substrate material.

5. Micromechanical infrared source according to Claim 1, **characterized in that**
- the heater structure (2, 12) is a resistance element arranged on a membrane, wherein the membrane spans a cavity (6) in the substrate material,
- the heater structure (2) is covered by a cap element (4), wherein the cap element (4) constitutes the first layer, and
- the second layer (5) is composed of a coating applied to the cap element.

6. Micromechanical infrared source according to Claim 1, **characterized in that** the heater structure (2) is coated with a filter layer having a bandpass-like transmission characteristic.

7. Carbon dioxide sensor for determining the carbon dioxide concentration in motor vehicles, containing a micromechanical infrared source according to Claim 1.

## Revendications

1. Source micromécanique d'infrarouge, qui contient :
- une structure de chauffage (2, 12) qui forme un rayonnement infrarouge et
- un moyen de filtrage (4, 5, 11, 14) disposé dans la direction de sortie du rayonnement de la source infrarouge et traversé par le rayonnement qui sort de la source infrarouge,
- le moyen de filtrage (4, 5, 11, 14) présentant une caractéristique de transmission passe-bande,
**caractérisée en ce que**
- le moyen de filtrage présente une succession formée d'une première couche (4, 11) et d'une deuxième couche (5, 14) dans la direction de sortie du rayonnement hors de la source infrarouge,
- **en ce que** l'une des deux couches présente un comportement de transmission en fonction de la longueur d'onde tel que pour les petites longueurs d'onde infrarouge, aucune transmission ou seule une faible transmission ait lieu et que pour les grandes longueurs d'onde infrarouge une transmission complète ou au moins grande ait lieu et que la montée des petites aux grandes valeurs de transmission ait lieu dans la plage qui entoure une première longueur d'onde,
- **en ce que** l'autre des deux couches présente un comportement de transmission en fonction de la longueur d'onde tel que pour les petites longueurs d'onde infrarouge une transmission complète ou élevée ait lieu et aux grandes longueurs d'onde infrarouge aucune transmission ou seule une transmission réduite ait lieu et que la descente des grandes aux petites valeurs de transmission ait lieu dans la plage qui entoure une deuxième longueur d'onde, et
- **en ce que** la première longueur d'onde est plus petite que la deuxième longueur d'onde.

2. Source micromécanique d'infrarouge selon la revendication 1, **caractérisée en ce que** l'une des deux couches est en verre et **en ce que** l'autre des deux couches est en silicium ou en germanium.

3. Source micromécanique d'infrarouge selon la revendication 1, **caractérisée en ce que** la structure de chauffage (2, 12) est un élément à résistance disposé sur une membrane, la membrane recouvrant une caverne (6) présente dans le matériau du substrat.

4. Source micromécanique d'infrarouge selon la revendication 2, **caractérisée en ce que** la structure de chauffage (2, 12) est un élément de résistance disposé sur une membrane, la membrane recouvrant une caverne (6) présente dans le matériau de substrat, **en ce que** le matériau de substrat (11) représente la première couche et **en ce que** la deuxième couche (14) est constituée d'un revêtement appliqué sur le matériau de substrat.

5. Source micromécanique d'infrarouge selon la revendication 1, **caractérisée en ce que** la structure de chauffage (2, 12) est un élément de résistance disposé sur une membrane, la membrane recouvrant une caverne (6) présente dans le matériau du substrat, **en ce que** la structure de chauffage (2) est recouverte par un élément en bonnet (4), l'élément en bonnet (4) représentant la première couche et **en ce que** la deuxième couche (5) est constituée d'un revêtement appliqué sur l'élément en bonnet.

6. Source micromécanique d'infrarouge selon la revendication 1**, caractérisée en ce que** la structure de chauffage (2) est revêtue d'une couche de filtrage qui présente une caractéristique de transmission passe-bande.

7. Détecteur de dioxyde de carbone destiné à déterminer la concentration en dioxyde de carbone dans des véhicules automobiles et qui contient une source micromécanique d'infrarouge selon la revendication 1.
